# EUROPEAN PATENT APPLICATION

(11) **EP 2 628 630 A2**
(43) Date of publication of application: **21.08.2013**
(21) Application number: 12006468.8
(22) Date of filing: 14.09.2012
(51) Int. Cl.: B60L 11/18

(54) **Multi-standard compatible EV charger**

(30) Priority: 20.02.2012 CN 201210040246
(71) Applicant: Eaton Corporation, Cleveland Ohio 44114-2584 (US)
(72) Inventor: Wu, Dongxiao, Changning District Shanghai 200335 (CN); Chen, Jiong, Changning District Shanghai 200335 (CN); Hua, Yahan, Changning District Shanghai 200335 (CN); Lu, Bin, Changning District Shanghai 200335 (CN)
(74) Representative: Wagner & Geyer

(57) **Abstract**

The present invention discloses a multi-standard compatible electrical vehicle charger, including a power converter having an interface compatible with messages or instructions of an internal protocol; when the electrical vehicle charger charges an electric vehicle, the power converter is adapted to output power to a battery of the electric vehicle; and a data transmission device having an internal interface compatible with messages or instructions of the internal protocol and an external interface compatible with messages or instructions of an external protocol; wherein when the electrical vehicle charger charges the electric vehicle, the data transmission device is adapted to communicate with a battery management system through the external interface according to the external protocol followed by the battery management system, and to communicate with the power converter through the internal interface according to the internal protocol followed by the power converter. This electrical vehicle charger improves the utilization rate of the electrical vehicle charger.

## Description

### FIELD OF INVENTION

The present invention is related to the field of electric vehicles (EVs), and especially related to a multi-standard compatible EV charger.

### BACKGROUND OF THE INVENTION

With the development of electric vehicle technology, the number of electric vehicles (EV) is growing rapidly, and EV charging stations similar to gas stations become popular.

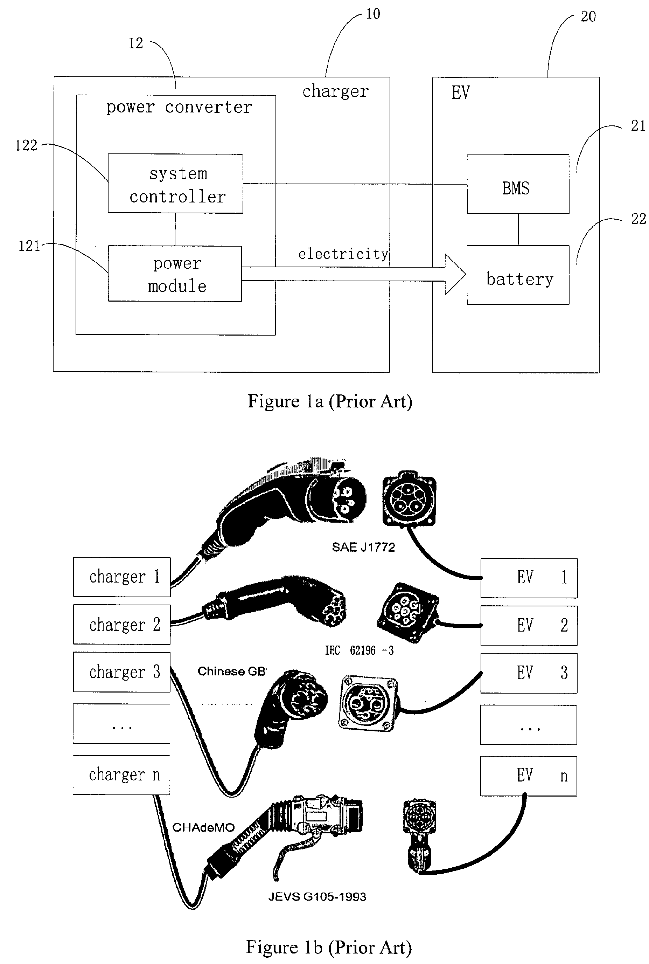

The connection between an electric vehicle and a charger within a charging station (also known as EV charger) during charging process is shown in figure 1a. A charger 10 includes power converter 12, which further includes a system controller 122 and a power module 121; an electric vehicle 20 includes a battery management system (BMS) 21 and a battery 22; the system controller 122 is coupled to the BMS 21.

Still referring to Figure 1, after the coupling of the charging circuit of the electric vehicle and the charger, the system controller 122 and the BMS 21 send data to each other according to predefined protocols. The system controller 122 controls the power module 121, which charges the battery 22

Nowadays, there are various types of communication protocols between system controller 122 and BMS 21, including CHAdeMO, SAE (Society of Automotive Engineer), IEC (International Electrotechnical Commission), etc., as shown in Table 1.

**Table 1**

| Coupler Standard | Communication Protocol |
|---|---|
| SAE J1772 | Physical circuit of the communication protocol is power line carrier communication (PLC). |
| JEVS G105-1993 | CHAdeMO |
| Chinese GB | Chinese GB |

SAE J1772 and IEC (IEC 62196-3) includes coupler standards and communication protocol standards. Chinese GB is a national standard of China, which includes a coupler standard and a communication protocol standard. Each communication protocol has specific protocol specifications with its respective address allocation modes, data package definitions and functions.

Therefore, as shown in Figure 1b, an EV charger following a specific protocol can only connect to the BMS following the same protocol and charge electric vehicles following the same communication protocol, resulting in low utilization rate of chargers.

### SUMMARY OF THE INVENTION

One purpose of the present invention is to provide a multi-standard compatible EV charger, to improve the utilization rate of the resource of EV chargers.

One aspect of the present invention provides a multi-standard compatible EV charger, including:
a power converter having an interface compatible with messages or instructions of an internal protocol; when the EV charger charges an electric vehicle, the power converter is adapted to output power to a battery of the electric vehicle; and
a data transmission device having an internal interface compatible with messages or instructions of the internal protocol and an external interface compatible with messages or instructions of an external protocol;
wherein when the EV charger charges an electric vehicle, the data transmission device is adapted to communicate with a battery management system through the external interface according to the external protocol followed by the battery management system, and to communicate with the power converter through the internal interface according to the internal protocol followed by the power converter.

Optionally, the multi-standard compatible EV charger further includes:
a plurality of couplers following different external protocols, being adapted to connect with an electrical vehicle; and
a power supply circuit, which is connected to the power converter and the couplers respectively, being adapted to provide output power of the power converter to the couplers;
wherein the power supply circuit is further coupled to the data transmission device and is adapted to send an indication message or a selection signal to the data transmission device to indicate the type of the external protocol followed by the battery management system; and
wherein after an electrical connection between one of the couplers and the electrical vehicle, the power supply circuit identifies the type of the external protocol followed by the battery management system of the electrical vehicle according to the identifier of the coupler, and generates the indication message or selection signal.

Optionally, the power converter includes a power module and a system controller;
the power module is adapted to output power to the power supply circuit; and
the system controller which has an interface compatible with messages or instructions of the internal protocol is adapted to communicate with the data transmission device according to the internal protocol.

Optionally, the data transmission device includes a protocol transformation module; and
the protocol transformation module is adapted to convert messages or instructions of an internal protocol into corresponding messages or instructions of an external protocol and vice versa.

Optionally, the internal protocol has instructions or messages including:
a POC (short for power converter output capacity) message for carrying configuration parameters related to an output capacity of a charger;
a CCR (short for communication interface configuration confirm request) message for carrying a charging level request of a battery of the electric vehicle;
a CSR (short for communication interface start charging request) message for carrying a start-of communication request, a start-of-charge request and a battery type identifier of the electric vehicle;
a CCS (short for communication interface charging status) message for carrying charging status of the electric vehicle;
a POS (short for Power converter output status) message for carrying real-time status of the charger; and
a CER (short for communication end charging request) message for carrying an end-of-charge request of the electric vehicle.

Optionally, the instructions or messages of the internal protocol further includes:
a PRA (short for Power converter configuration confirm acknowledgement) message for carrying a configuration confirm identifier of the charger; and
a PEN (short for Power converter error notice) message for carrying an error type of the charger.

Optionally, the protocol transformation module is further adapted to analyze messages or instructions of the external protocol, and to avoid performing a protocol conversion operation (i.e. protocol mapping) for messages or instructions not required by the internal protocol.

Another aspect of the present invention provides a data transmission device, which includes: an internal interface compatible with messages or instructions of an internal protocol and an external interface compatible with messages or instructions of an external protocol;
wherein the data transmission device is adapted to communicate through the external interface with a battery management system of an electric vehicle according to the external protocol followed by the battery management system, and is adapted to communicate through the internal interface with a power converter according to the internal protocol followed by the power converter.

Optionally, the data transmission device further includes a protocol transformation module, being adapted to convert instructions or messages of the internal protocol into corresponding instructions or messages of the external protocol and vice versa.

Another aspect of the present invention provides a multi-standard compatible EV charger, including: a power converter, including a system controller and a power module;
wherein the system controller, which includes an interface compatible with messages or instructions of a plurality of communication protocols, is adapted to receive messages or instructions of the plurality of communication protocols, and to configure according to the messages or instructions an output power of the power module which is adapted to provide output power; and
wherein when the EV charger charges the electric vehicle, the system controller is coupled to the battery management system of the electric vehicle, and is adapted to communicate with the battery management system according to the communication protocol followed by the battery management system.

Optionally, the multi-standard compatible EV charger further includes: an indication module, being adapted to send an indication message or a selection signal to the system controller to indicate the type of the communication protocol followed by the battery management system.

Optionally, the indication module receives input and generates the indication message or selection signal; or
after an electrical connection between a coupler of the EV charger and an electrical vehicle, the indication module identifies the type of the communication protocol followed by the battery management system of the electrical vehicle according to the identifier of the coupler, and generates the indication message or selection signal.

According to still another aspect of the present invention, there is provided a multi-standard compatible EV charger, including:
a power converter, including:
   a power module, being adapted to provide output power; and
   a system controller, being adapted to control the power module to output power; and
an instruction analysis module having an interface compatible with messages or instructions of a plurality of communication protocols, and being adapted to receive messages or instructions of the plurality of communication protocols;
wherein when the EV charger charges the electric vehicle, the instruction analysis module is coupled respectively to the system controller and the battery management system of the electric vehicle, and is adapted to :
   receive messages or instructions of a first communication protocol from the battery management system, convert them into corresponding messages or instructions of the second communication protocol followed by the system controller, and send the transformed messages or instructions to the system controller; and
   receive messages or instructions of the second communication protocol from the system controller, convert them into corresponding messages or instructions of the first communication protocol followed by the battery management system, and send the transformed messages or instructions to the battery management system.

Optionally, the multi-standard compatible EV charger further includes an indication module, being adapted to send an indication message or a selection signal to the instruction analysis module to indicate the protocol type of the first communication protocol.

Compared with the prior art, the present invention has the advantage of improving the utilization rate of EV chargers.

### DESCRIPTION OF THE DRAWINGS

Figure 1a is a schematic diagram of a connection between a EV charger in a charging station and an electric vehicle in charge in the prior art;
Figure 1b is a schematic diagram of couplers of various protocols followed by electrical vehicles and EV charger in the prior art;
Figure 2 is a schematic diagram of a multi-standard compatible EV charger provided according to an embodiment of the present invention;
Figure 3 is a schematic diagram of a multi-standard compatible EV charger provided according to another embodiment of the present invention;
Figure 4 is a schematic diagram of a multi-standard compatible EV charger provided according to still another embodiment of the present invention;
Figure 5 is a sequence chart of an example communication process of the EV charger as shown Figure 4 using an internal protocol according to another embodiment of the present invention;
Figure 6 is a schematic diagram illustrating a protocol transformation or protocol mapping in the sequence chart of figure 5 performed by a data transmission device;
Figure 7-10 are sequence charts of example communication process of the EV charger as shown Figure 4 using an internal protocol according to embodiments of the present invention;
Figure 11 is a schematic diagram of a multi-standard compatible EV charger provided according to another embodiment of the present invention.

### DESCRIPTION OF EMBODIMENTS

In order to make the object of the invention, the technical solution and the advantages clearer and more concrete, the invention will be described now, without restrictive intent, with reference to the examples illustrated in the figures of the drawings.

During research and development, the inventor discovered that: in order to have an EV charger (e.g. DC EV charger) to charge electric vehicles following different communication protocols, the power converter within the EV charger can be reused for different standards, i.e., the power converter needs to receive and understand instructions under different protocols. In this way, during a charging process, the power converter is firstly informed of the type of protocol followed by the BMS of the electrical vehicle, which is connected to the EV charger. Then, the power converter communicates with the BMS via the right type of protocol.

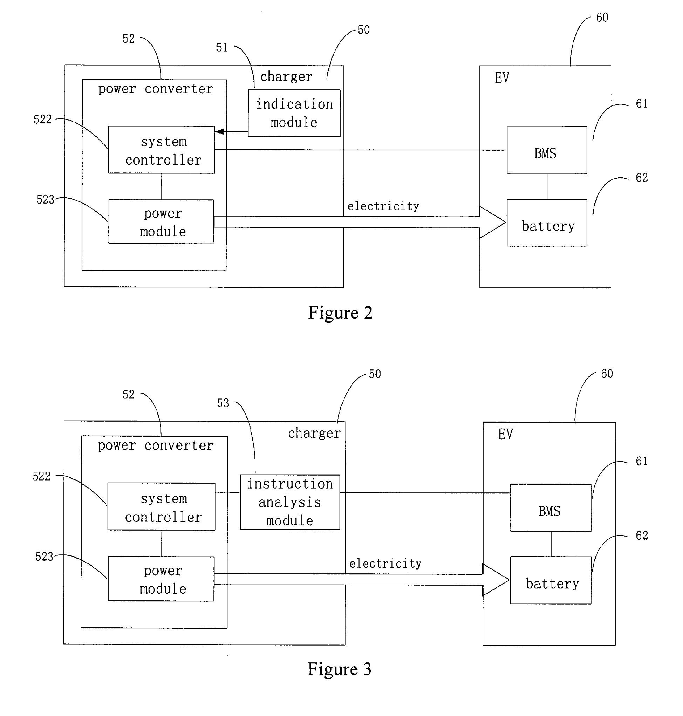

One embodiment of the present invention involves a multi-standard compatible EV charger. As shown in Figure 2, this EV charger 50 includes: an indication module 51 and a power converter 52 coupled to the indication module 51; and the power converter 52 further includes a system controller 522 and a power module 523.

In this embodiment, the system controller 522 is capable of analyzing instructions under a plurality of prevalent communication protocols, including CHAdeMO, SAE, IEC, etc. The system controller 522, which has an interface compatible with messages or instructions of the plurality of communication protocols, is adapted to receive messages or instructions of the plurality of communication protocols and to configure the output power of the power module according to the received messages or instructions. The indication module 51 is coupled to the system controller 522, and sends an indication message to the system controller 522 to inform the system controller 522 of the type of communication protocol followed by the currently connected electrical vehicle 60 (specifically the BMS 61). The system controller 522 is adapted to establish communication with the BMS 61 depending on the type of communication protocol within the indication message and is adapted to control the power module 523 when the power module is charging the electrical vehicle 60 (specifically the battery 62).

In addition, the indication module 51, which is positioned on the EV charger 50, can receive operations of an operator to generate the indication message.

Because couplers of existing EV chargers and electrical vehicles correspond to different specific communication protocols (i.e. certain communication protocol for certain coupler), when a coupler is electrically connected, the indication module 51 is configured to identify the type of communication protocol followed by the electrical vehicle according to the coupler's identifier. In this way, the indication module 51 automatically identifies the type of communication protocol followed by the electrical vehicle 60, and in turn, the whole charging process can be finished automatically.

Because the number of standards for electrical vehicles is large and growing rapidly, the power converter needs to be compatible with emerging communication protocols.

In another embodiment, the present invention includes a multi-standard compatible EV charger. As shown in figure 3, this EV charger 50 includes: an instruction analysis module 53 and a power converter 52; the power converter 52 further includes a system controller 522 and a power module 523; the instruction analysis module 53 is coupled to the system controller 522 and the BMS 61 respectively, forwarding data between the system controller 522 and the BMS 61.

In this embodiment, the instruction analysis module 53 is configured to analyze instructions under a plurality of existing communication protocol, including CHAdeMO, SAE, IEC, Southern Grid (China Southern Power Grid), GB (national standard), etc., and is configured to establish mapping relationships among the messages under these protocols. The instruction analysis module 53 is configured to map messages under various protocols onto messages under the protocol followed by the system controller 522. In this way, no matter what communication protocol the system controller 522 follows, the system controller 522 will establish communication with the BMS 61 and control the power module 523 to charge the electrical vehicle 60 (specifically the battery 62).

An example of mapping relationships among messages from prevalent communication protocols is shown in Table 1, which illustrates data-field mapping relationships among messages from Southern Grid, GB and CHAdeMO (wherein PS is short for PDU Specific, which can be considered as a target address).

**Table 1**

| | **Southern Grid** | | **GB** | | **CHAdeMO** | |
|---|---|---|---|---|---|---|
| Content | Name | Data field | Name | Data field | PS | Data field |
| Maximum output voltage | CML | 1,2 | CMTL | 1,2 | 108H | 2,3 |
| Maximum output current | CML | 3,4 | CMTL | 3,4 | 108H | 4 |
| Maximum output power | CML | 5,6 | CMTL | 5,6 | Null | |
| Output voltage request | BCL | 1,2 | BCLR | 1,2 | 102H | 2,3 |
| Output current request | BCL | 3,4 | BCLR | 3,4 | 102H | 4 |
| Output power request | BCL | 5,6 | BCLR | 5,6 | Null | |
| Charging mode | BCL | 7 | BCLR | 7 | default | |
| Configuration confirm | CRO | 1 | CCRM | 1 | 109H | 6 |
| Start communication | Null | | Null | | Null | |
| Battery ID | BRM | 1-16 | BRM | 1,2,3,4 | Null | |
| Start charging | BRO | 1 | BCRM | 1 | 102H | 4 |
| Stop reason | BST | 1 | BACM | 1 | 102H | 5 |
| Stop charging | BST | Indirect | BACM | 4 | 102H | 6 |
| Error type | CST | 2 | CACM | 2 | 109H | 6 |
| Present output voltage | CCS | 1,2 | CCS | 1,2 | 109H | 2,3 |
| Present output current | CCS | 3,4 | CCS | 3,4 | 109H | 4 |
| Present output power | Null | | Null | | Null | |
| Charging time | CCS | 5,6 | CCS | 5,6 | Null | |
| Remaining time | BCS | 7 | BCS | 8 | 109H | 7,8 (extended) |
| Total charging time | Null | | Null | | Null | |
| State of charge | BCS | 6 | BCS | 7 | 102H | 7 |
| Battery temperature | BCS | 5 | BCS | 5(min), 6(max) | Null | |

In another embodiment of the present invention, the instruction analysis module 53 can also be positioned outside of the EV charger 50.

In the embodiments where an instruction analysis module 53 is included, because of the addition thereof, when there is a new type of communication protocol or an update of an existing communication protocol, the instruction analysis module 53 is the only unit to be updated. The power converter of the EV charger 50 need not be replaced. In this way, the power converter is reused to charge electrical vehicles following different protocols.

In the above embodiments, the instruction analysis module has to communicate with the power converter via the communication protocol followed by the power converter. Thus, the types of instruction analysis modules multiply quickly.

To solve this problem, according to another embodiment of the present invention, there is provided a unified internal communication protocol between the instruction analysis module and the power converter. The instruction analysis module here can also be referred to as data transmission device, which is responsible to perform transformation operations (i.e. protocol mapping) between the internal protocol and existing communication protocols (also known as external communication protocol). The internal communication protocol is abbreviated to internal protocol and the external communication protocol is abbreviated to external protocol hereinafter.

Normally, a charging process of electric vehicles includes four stages:
(1) Handshaking stage: after completing physical connection between a BMS and a charger and power on, the BMS and the charger are in a handshake stage, and the charger confirms vehicle-related information such as vehicle identification number (VIN).
(2) Configuration stage: after the handshake stage, the BMS and the charger are in a configuration stage. In this stage, the charger sends maximum output level to the BMS, and the BMS decides if the charger is able to charge the vehicle by checking if the maximum output level satisfies charging requirements.
(3) Charging stage: after the configuration stage, the BMS and the charger are in a charging stage. The BMS sends battery's charging level requirements (including a charging mode, and the voltage, current and power value required by the battery) and battery charging status (including the measured value of the charging current and voltage, maximum and minimum temperatures of the battery pack, battery SOC, and remaining charging time) to the charger in real time. The charger sends its charging status (including voltage output value, current output value and accumulated charging time) to the BMS, the charger adjusts the charging current and voltage according to the charging level requirement of the battery, and both the BMS and the charger decide if to stop the charging process according to their respective charging parameters or according to a stop-charging message received from the other party.
(4) End-of-charging stage: after the BMS or the charger stops the charging stage, the BMS and the charger are in an end-of-charging stage. In this stage, the BMS send to the charger the statistical data within the whole charging process.

One of ordinary skill in the art can appreciate that the above various data transmissions do not have to follow the described four-stage mode, they can be finished within more or less stages; and, the data transmissions included in each stage do not have to be exactly the same with the described four-stage mode, they can be arranged in any way as long as the communication purpose is fulfilled.

To make sure the charging process is carried out smoothly, there is provided a unified internal communication protocol according to one embodiment of the present invention, message types of the protocol being shown in table 1.

**Table 1**

| Index | Name | Purpose of the message |
|---|---|---|
| 1 | POC | The power converter sends this message to inform the BMS of the configuration parameters related to its output capacity. Specifically, in handshake stage, the power converter informs the data transmission device of the information; and in charging stage, the data transmission device informs the BMS of the information. |
| 2 | CCR | In charging stage, the BMS sends this message to the power converter, carrying the charging level request. (The battery requests optimal charging levels according to its own charging characteristic curve) |
| 3 | PRA | In configuration stage, after the power converter finishes all configurations, the power converter sends this message to inform the BMS that the power converter is ready for charging. |
| 4 | CSR | In handshake stage, the BMS uses this message to send a start-of-communication request and a battery type identifier to the power converter; In configuration stage, when ready for charging, the BMS uses this message to send a start-of-charge request to the power converter. |
| 5 | PEN | In charging stage, when a charging process stops because of a fault or error of the power converter, the power converter sends this message to the BMS to inform the specific error type of the power converter. |
| 6 | CCS | In charging stage, the charging status of the BMS is sent through this message to the power converter. |
| 7 | POS | In charging stage, the real-time status of the power converter is sent through this message to the BMS. |
| 8 | CER | In charging stage, the BMS uses this message to initiate an end-of-charge request to the power converter. |

It should be noticed that messages of the above unified internal communication protocol can also be referred to as frame, and the message-type table can also be referred to as frame-type table; in addition, messages and frames include instructions, and the above message-type table can also be referred to as instruction table. The term 'message' will be used, without restrictive intent, in the following embodiments to describe the unified internal communication protocol.

According to the purposes of the above messages, data included in the messages are shown as table 2.

**Table 2**

| message name | Data that can be included | | | | | | | | | | | |
|---|---|---|---|---|---|---|---|---|---|---|---|---|
| POC | maximum output voltage | | maximum output current | | maximum output power | | | | | | | |
| CCR | output voltage | output | | output power | | charging mode | | | | | | |
| | level request | | current level request | | | | level request | | | | request | |
| PRA | configuration confirm | | | | | | | | | | | |
| CSR | battery type | | | | | start communication | | | start charging | | | |
| CER | charging stop reason, including: battery error, power converter error, battery full, exceeds maximum charging time, etc. | | | | | | | | | end-of-charge request | | |
| PEN | error type | | | | | | | | | | | |
| POS | out voltage by power converter | | | out current by power converter | | | | out power by power converter | | | | |
| CCS | charging time | remaining charging time | | | estimated total charging time | | | battery SOC | | | | battery temperature |

According to the purposes of the messages and the data included in the messages, the mapping relation between the unified internal communication protocol (also referred to as internal protocol) and external communication protocols (also referred to as external protocol) such as CHAdeMo is defined in Table 3.

**Table 3**

| | internal protocol | external protocol (CHAdeMo) |
|---|---|---|
| 1 | POC | 108H |
| 2 | CCR | part of 102H |
| 3 | PRA | part of 109H |
| 4 | CSR | part of 102H |
| 5 | CER | part of 102H |
| 6 | PEN | part of 109H |
| 7 | POS | part of 109H |
| 8 | CCS | part of 109H and part of 102H |

In other embodiments of the present invention, message types of the internal protocol as shown in Table 1 can be extended, and the number of types to be extended depends on the requirement of users; similarly, data in the Table 2 and mapping relations in the Table 3 (also referred to as protocol-relation table or protocol mapping table) can also be extended.

On one hand, the internal protocol is used between the data transmission device and the power converter; on the other hand, external protocols such as CHAdeMO are used between the data transmission device and the BMS. The data flow of the charging process using above internal protocol is as follows:
Firstly, in handshake stage:
   S11, the data transmission device triggers the power converter to start the communication process (CSR message);
   S 12, the data transmission device forwards the battery type to the power converter (CSR message); the battery type is transmitted to the data transmission device from the BMS through an external protocol;
   S 13, the power converter sends its output capacity to the data transmission device (POC message).
Secondly, in configuration stage:
   S20, the data transmission device forwards the output capacity to the BMS;
   S21, the data transmission device forwards a start-of-charge request (CSR message), and requests the power converter to start charging; the start-of-charge request is transmitted from the BMS to the data transmission device through external protocols;
   S22, after the power converter has prepared for charging, the power converter sends a confirmation message (PRA message) to the data transmission device; and the data transmission device forwards this confirmation message to the BMS.
Thirdly, in charging stage:
   S31, the data transmission device forwards the battery's charging level requirements (CCR message) and battery status (CCS message) to the power converter; the charging level requirements and the battery status are transmitted from the BMS to the data transmission device through the external protocol;
   S32, after the power converter receives the charging level requirements (CCR message) and the battery status message (CCS message), the power converter outputs power according to the required charging level (the system controller controls the power module to complete this function), and sends output status of the power converter to the data transmission device (POS message), the output status being forwarded (through messages of the external protocol corresponding to the POS) to the BMS by the data transmission device;
   S33, during normal charging process, steps S31 and S32 are carried out repeatedly;
   S34, end-of-charge signals can be triggered by two independent parts:
      (1) after an error is occurred in the power converter, error prompts (PEN message) can be sent to the data transmission device; the data transmission device forwards the error prompts (through messages of the external protocol corresponding to the PEN) to the BMS after finishing protocol conversion;
      (2) when the BMS needs to stop charging (normal stop/fault stop), the BMS uses the external protocol to send an end-of-charge request to the data transmission device, and the data transmission device sends the end-of-charge request (CER message, including the end-of-charge request and reasons to stop) to the power converter.
Fourthly, in end-of-charging stage:
   the data transmission device and the BMS exchange their respective statistical information during the charging process (including the maximum and minimum voltages of the battery, initial and final SOC, output energy, output power, accumulated charging time, etc.), while the power converter and the data transmission device can avoid exchange information.

One of ordinary skill in the art can appreciate that various modifications can be made to the forms or the numbers of the above described instructions of the internal protocol, as long as information transmission requirements during each charging stage can be satisfied.

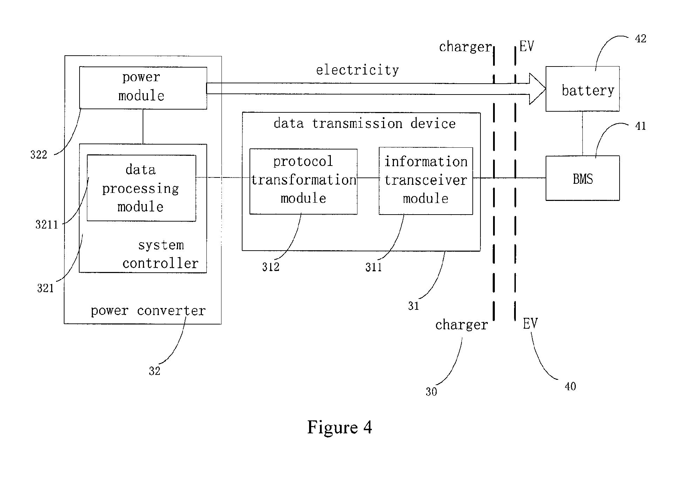

Based on above design of the internal protocol, there is provided in this embodiment an EV charger as shown in figure 4. The EV charger 30 includes: a data transmission device 31, which is coupled to the BMS 41 of the electric vehicles 40 and communicates with the BMS 41 using an external protocol; and a power converter 32, which communicates with the data transmission device 31 using the internal protocol, and realizes communicating with the BMS 41 and charging the battery 42 through data transmission device 31.

Still referring to figure 4, the data transmission device 31 further includes:
an information transceiver module 311, which is coupled to the BMS 41 of the electric vehicles 40 and communicates with the BMS 41 using an external protocol; and
a protocol transformation module 312, which is adapted to transform messages, frames or instructions of various external protocols to messages, frames or instructions of the internal protocol or vice versa (that is to transform messages, frames or instructions of the internal protocol to messages, frames or instructions of various external protocols), and which is coupled to the power converter 32 and communicates with the power converter 32 using an internal protocol.

Still referring to figure 4, the power converter 32 further includes:
a power module 322, which is adapted to charge the battery 42; and
a system controller 321, which further includes:
   data processing module 3211, being coupled to the protocol transformation module 312, and being adapted to analyze messages of the internal protocol and control the power module 322 to charge the battery 42 or perform other operations (such as sending requests or responses data to the BMS 41) according to instructions within the messages.

According to another embodiment of the present invention, the data processing module 3211 can be omitted, the system controller 321 is coupled to the protocol transformation module 312, and the system controller 321 is adapted to analyze messages of the internal protocol and control the power module 322 to charge the battery 42 or perform other operations according to instructions within the messages.

According to another embodiment of the present invention, the data transmission device 31 can further include a second information transceiver module (not shown) for communicating with the data processing module 3211 through the internal protocol.

According to another embodiment of the present invention, the information transceiver module 311 can be omitted, and the protocol transformation module 312 can communicate directly with the data processing module 3211 and the BMS. The communication between the protocol transformation module 312 and the system controller 321 uses the internal protocol, while the communication between the protocol transformation module 312 and the BMS 41 uses an external protocol.

According to another embodiment of the present invention, protocol transformation module 312 can be omitted, and the data transmission device 31 is adapted to transform messages, frames or instructions of various external protocols to messages, frames or instructions of the internal protocol or vice versa

According to another embodiment of the present invention, the data transmission device 31 can be integrated into the power converter 32 or into the system controller 321.

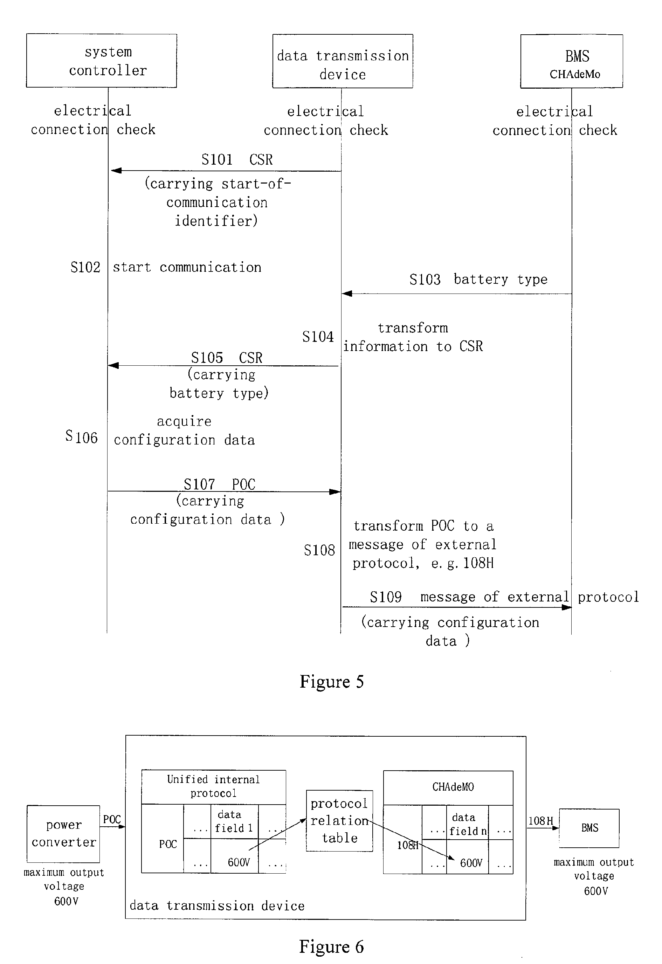

According to one embodiment of the present invention, an example process that the EV charger 30 uses the internal protocol to communicate is shown in figure 5. This communication process illustrates how the electric vehicle 40 acquires the configuration parameter of "maximum output voltage" of the power converter 32. The communication procedure includes:
S101, after the electric vehicles 40 plugs in and after a successful electrical connection check, the data transmission device 31 sends a CSR message to the power converter 32, which triggers the power converter to initiate a communication procedure;
S102, after receiving the CSR message, the system controller 321 initiates a communication procedure and prepares to receive messages from the data transmission device31;
S103, the BMS sends the battery type to the data transmission device through external protocols;
S104, the data transmission device 31 (or the protocol transformation module 312) concerts the received message into a CSR message of the internal protocol according to the protocol-relation table;
S105, the data transmission device 31 (or the information transceiver module 311) sends the CSR message to the system controller 321;
S 106, the system controller 321 acquires the configuration data of maximum output voltage which is 600V according to instructions included in the message (the configuration data of maximum output voltage is stored within the system controller 321 when the power converter is manufactured);
S107, the system controller 321 sends the configuration data of maximum output voltage which is 600V to the data transmission device 31 through the message of POC of the internal protocol;
S108, the data transmission device 31 (specifically the protocol transformation module 312) converts the response message of POC into a message of the external protocol such as 108H of the CHAdeMo, according to the protocol-relation table;
S109, the data transmission device 31 (specifically the information transceiver module 311) sends the message 108H to the BMS 41, which finishes the communication procedure.

According to the decision if this configuration data of 600V satisfies the requirement of the vehicle's battery, the BMS 41 provides to customers information of follow-up actions. If the configuration data satisfies the requirement of the battery, left steps of the configuration stage are carried out; otherwise, an error handling process is carried out, and the electric vehicle informs customers that the battery can not be charged and its reasons.

In addition, the above steps of S106∼S108 are also illustrated in figure 6, which highlights the protocol transformation or mapping process carried out by the data transmission device 31 (or the protocol transformation module 312).

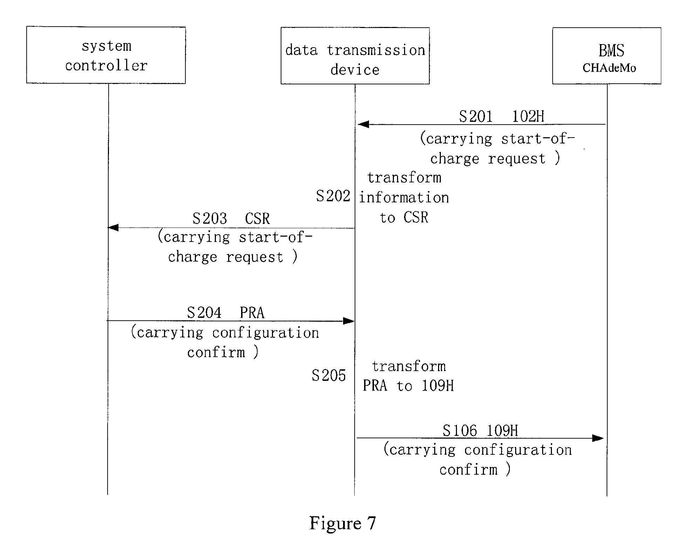

According to another embodiment of the present invention, an example process that the EV charger 30 uses the internal protocol to communicate is shown in figure 7. This communication process illustrates how an electric vehicle 40 which follows CHAdeMo protocol exchanges data with the power converter 32 in the configuration stage, which includes:
S201, the BMS sends the start-of-charge request to the data transmission device through a message of the CHAdeMo protocol (102H, DB4 i.e. the fourth byte);
S202, the data transmission device 31 (specifically the protocol transformation module 312) converts this message into the CSR message of the internal protocol according to the protocol-relationship table;
S203, the data transmission device 31 sends the CSR message (which carries the start-of-charge request) to the system controller 321 to request the power converter to start charging;
S204, after it has prepared for charging, the power converter sends a PRA message to the data transmission device; (if the power converter has not prepared for charging, the BMS waits and repeats a plurality of times until receiving a timeout error)
S205, the data transmission device transforms the PRA message into 109H (DB6); and
S206, the data transmission device sends this message to the BMS.

After the data communication in configuration stage is done, the charging stage begins. The BMS calculates optimal current value according to the battery status and sends current instructions, monitors input current, and sends error signals when faults occur.

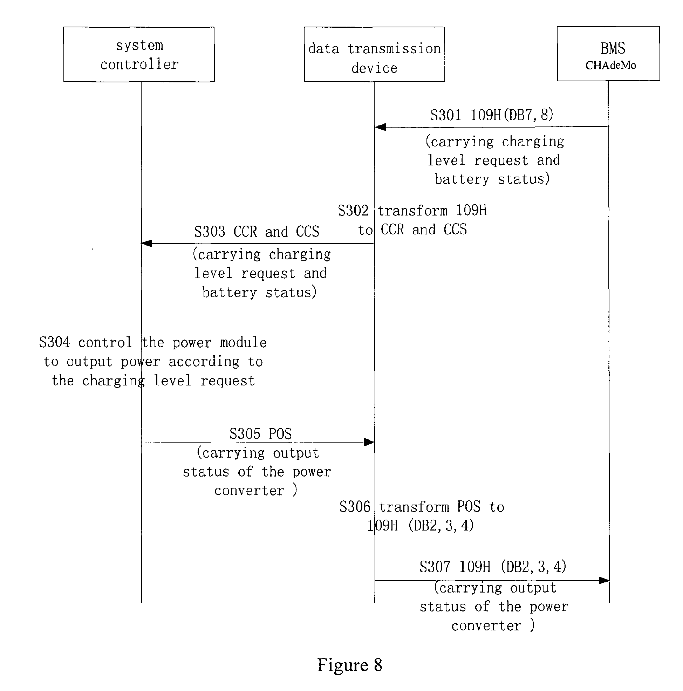

According to another embodiment of the present invention, an example process that the EV charger 30 uses the internal protocol to communicate is shown in figure 8. This communication process illustrates how an electric vehicle 40 which follows CHAdeMo protocol exchanges data with the power converter 32 in the charging stage, which includes:
S301, the BMS sends a charging level requirement and battery status to the data transmission device, the charging level requirement is in 102H (DB2, 3, 4), and the battery status is in 109H (DB7, 8);
S302, the data transmission device 31 (specifically the protocol transformation module 312) converts this message into the CCR and CCS message of the internal protocol, according to the protocol-relation table;
S303, the data transmission device 31 sends the CCR and CCS (which carry the charging level requirement and the battery status) to the system controller 321;
S304, after receiving the charging level requirement and the battery status information, the system controller 321 outputs power (the system controller 321 controls the power module 322 to carry out this function) according to the charging level requirement;
S305, the system controller 321 sends the output status of the power converter to the data transmission device 31 (through the POS message);
S306, the data transmission device 31 (specifically the protocol transformation module 312) converts the POS message into 109H (DB2, 3, 4), according to the protocol-relation table; and
S307, the data transmission device 31 sends this message to the BMS.

This communication of charging stage realizes information exchange during the charging stage. During this stage, the charger controls the charging output voltage, and monitors charging abnormal conditions periodically; the BMS calculates optimal current value according to the battery status and sends current instructions, monitors input current, and sends error signals when faults occur.

There are two ways to trigger the end-of-charge signal, including a first way that an error of the power converter 32 triggers this signal, and a second way that the BMS triggers this signal when it needs to stop charging (normal stop/fault stop).

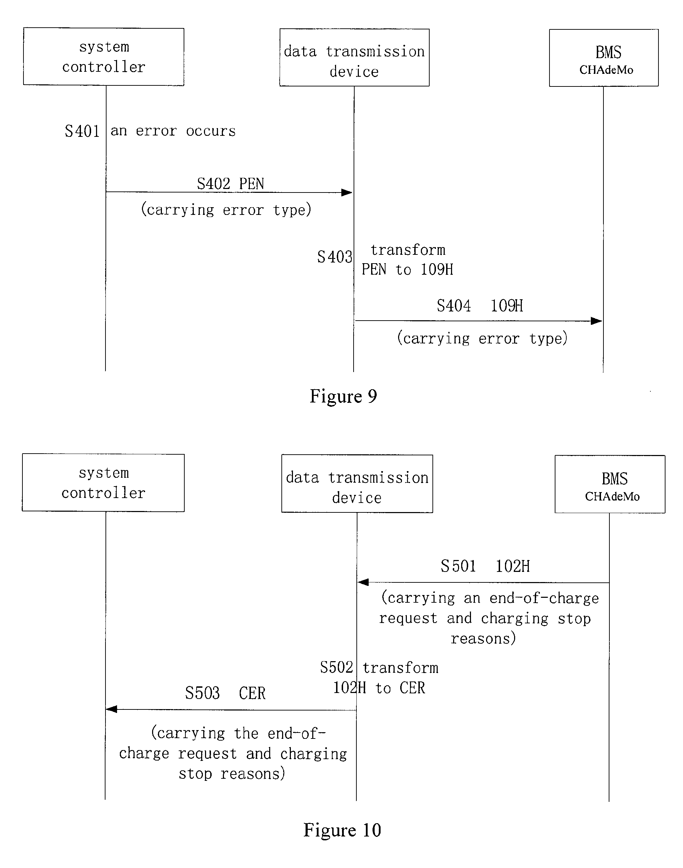

According to another embodiment of the present invention, according to the above first way, an example process that the EV charger 30 uses the internal protocol to communicate is shown in figure 9. This communication process illustrates how an electric vehicle 40 which follows CHAdeMo protocol exchanges data with the power converter 32 to stop the charging process, which includes:
S401, the system controller 321 detects a fault or error at the power converter;
S402, the system controller 321 sends the error type information to the data transmission device 31 (through PEN message);
S403, the data transmission device 31 transforms the PEN message (carrying the error type) to the corresponding 109H (DB6); and
S404, the data transmission device 31 sends the message to the BMS.

According to another embodiment of the present invention, according to the above second way, an example process that the EV charger 30 uses the internal protocol to communicate is shown in figure 10. This communication process illustrates how an electric vehicle 40 which follows CHAdeMo protocol exchanges data with the power converter 32 to stop the charging process, which includes:
S501, the BMS sends an end-of-charge request through 102H (DB5, 6) to the data transmission device 31;
S502, the data transmission device 31 transforms this 102H (carrying the end-of-charge request and charging stop reasons) to the corresponding CER message;
S503, the data transmission device 31 sends the CER message (carrying the end-of-charge request and charging stop reasons) to the power converter (specifically the system controller 321).

The data transmission device does not forward all messages from the BMS to the power converter; the data transmission device possesses certain data processing ability, and only forwards necessary filtered messages to the power converter.

For example, the data transmission device calculates the charging time, and sends the result to the power converter and the BMS simultaneously, while the total charging time is processed in a similar way. For another example, the data transmission device can process the end-of-charge request from the BMS, keeps the charging stop reasons, and only sends an end-of-charge order to the power converter.

One of ordinary skill in the art can appreciate that the above embodiments using CHAdeMo as external protocols are provided purely by way of example and without restrictive intent.

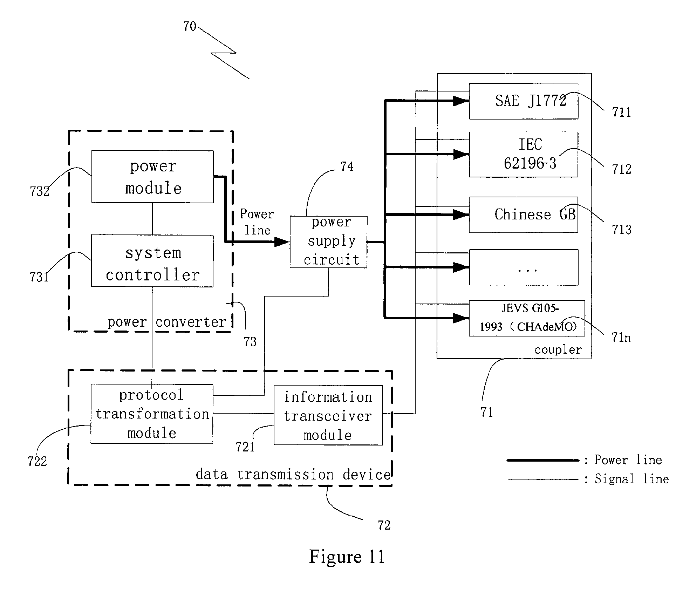

One of ordinary skill in the art can appreciate that embodiments shown in figures 2, 3, and 4 can be combined as required. For example, figure 11 illustrates an embodiments based on the combination of embodiments shown in figure 2 and figure 4. An EV charger 70 includes a coupler 71, a data transmission device 72, a power converter 73 and a power supply circuit 74, which are coupled in sequence.

Still referring to figure 11, the coupler 71 is adapted to be coupled to a coupler of an electrical vehicle to perform power and data transmission; the coupler 71 further includes a coupler 711 of SAE JI772, a coupler 712 of IEC62196-3, a coupler 713 of Chinese GB, a coupler 71n of CHAdeMO, etc. (which are collectively referred to as coupler 71).

The data transmission device 72 includes an information transceiver module 721 and a protocol transformation module 722. The information transceiver module 721 is coupled to the coupler 71 to perform data transmission, the protocol of the data transmission being an external protocol of the coupler. The protocol transformation module 722 is coupled to the power supply circuit 74 and the information transceiver module 721 respectively, to perform data transmission including: on one hand, acquiring a selection signal or an indication message from the power supply circuit 74 to get the type of the external protocol of the electrical vehicle connected with the charger 70; on the other hand, the information transceiver module 721 and the coupler 71 communicate with each other according to the external protocol. The protocol transformation module 722 is adapted mainly to perform protocol conversion according to the selection signal, which is the same as protocol conversion carried out by the protocol transformation module 312 as shown in figure 4. The protocol transformation module 722 is further coupled to the power converter 73 to communicate with the power converter 73 under the internal protocol.

One of ordinary skill in the art can appreciate that the protocol transformation module 722 can also perform message mapping and conversion according to the mapping table, while the selection signal used in this embodiment, instead of message mapping, improves efficiency.

The power converter 73 further includes a system controller 731 and a power module 732, and the system controller 731 has an interface, which is compatible with the internal protocol, to receive messages or instructions of the internal protocol to configure the power module 732 to output power. Specifically, the system controller 731 which is coupled to the protocol transformation module 722 communicates with the protocol transformation module 722 with the internal protocol, and controls the charging process together with the BMS of the electrical vehicle, according to the communication. The power module 732 which is coupled to the power supply circuit 74 provides electric power to the electrical vehicle through the power supply circuit 74.

The power supply circuit 74 is coupled to the coupler 71 to transmit electric power to the electrical vehicle through the coupler 71. The power supply circuit 74 is coupled to the protocol transformation module 722 and sends the selection signal to the protocol transformation module 722. A detailed procedure includes: after the coupler 71 is electrically connected to an electrical vehicle, the power supply circuit 74 is able to determine which coupler within the coupler 71 is now being used for connection; the power supply circuit 74 determines the type of external protocol to be CHAdeMO according to the specific coupler such as the coupler 71n, and sends this protocol type to the protocol transformation module 722.

Take the type of communication protocol of an electrical vehicle being CHAdeMO for example, the charging process from the EV charger 70 to the electrical vehicle includes:
firstly, the electrical connection between the coupler 71n and a coupler of the electrical vehicle is completed;
secondly, the power supply circuit 74 sends an indication message or a selection signal, which contains the type "CHAdeMO" of the external protocol, to the protocol transformation module 722;
thirdly, the system controller 731, the protocol transformation module 722, and the BMS of the electrical vehicle perform communications of the handshaking stage, the configuration stage and the charging stage. After that, the system controller 731 and the BMS control the charging process till the end.

Although the present invention has been illustrated and described with reference to above embodiments, those ordinary skilled in the art shall appreciate that various modifications in forms and details may be made without departing from the spirit and scope of the invention.

## Claims

1. A multi-standard compatible electrical vehicle charger, comprising:
a power converter having an interface compatible with messages or instructions under an internal protocol; when the electrical vehicle charger charges an electric vehicle, the power converter is adapted to output power to a battery of the electric vehicle; and
a data transmission device having an internal interface compatible with messages or instructions of the internal protocol and an external interface compatible with messages or instructions of an external protocol;
wherein when the electrical vehicle charger charges the electric vehicle, the data transmission device is adapted to communicate with a battery management system through the external interface according to the external protocol followed by the battery management system, and to communicate with the power converter through the internal interface according to the internal protocol followed by the power converter.

2. The multi-standard compatible electrical vehicle charger of claim 1, further comprising:
a plurality of couplers following different external protocols, being adapted to connect with the electrical vehicle; and
a power supply circuit, which is connected to the power converter and the couplers, respectively, being adapted to provide output power of the power converter to the couplers;
wherein the power supply circuit is further coupled to the data transmission device and is adapted to send an indication message or a selection signal to the data transmission device to indicate the type of the external protocol followed by the battery management system; and
wherein after an electrical connection between one of the couplers and the electrical vehicle, the power supply circuit identifies the type of the external protocol followed by the battery management system of the electrical vehicle according to the identifier of the coupler, and generates the indication message or selection signal.

3. The multi-standard compatible electrical vehicle charger of claim 2, wherein the power converter includes a power module and a system controller;
the power module is adapted to output power to the power supply circuit; and
the system controller which has an interface compatible with messages or instructions of the internal protocol is adapted to communicate with the data transmission device according to the internal protocol.

4. The multi-standard compatible electrical vehicle charger of claim 1, wherein the data transmission device includes a protocol transformation module; and
the protocol transformation module is adapted to convert messages or instructions of an internal protocol into corresponding messages or instructions of an external protocol and vice versa.

5. The multi-standard compatible electrical vehicle charger of claim 4, wherein the internal protocol has instructions or messages including:
a POC message for carrying configuration parameters related to an output capacity of a charger;
a CCR message for carrying a charging level request of a battery of the electric vehicle;
a CSR message for carrying a start-of-communication request, a start-of-charge request and a battery type identifier of the electric vehicle;
a CCS message for carrying charging status of the electric vehicle;
a POS message for carrying real-time status of the charger; and
a CER message for carrying an end-of-charge request of the electric vehicle.

6. The multi-standard compatible electrical vehicle charger of claim 5, wherein the instructions or messages of the internal protocol further includes:
a PRA message for carrying a configuration confirm identifier of the charger; and
a PEN message for carrying an error type of the charger.

7. The multi-standard compatible electrical vehicle charger of claim 4, wherein the protocol transformation module is further adapted to analyze messages or instructions of the external protocol, and to avoid performing a protocol conversion operation for messages or instructions not required by the internal protocol.

8. A data transmission device, comprising:
an internal interface compatible with messages or instructions of an internal protocol and an external interface compatible with messages or instructions of an external protocol;
wherein the data transmission device is adapted to communicate through the external interface with a battery management system of an electric vehicle according to the external protocol followed by the battery management system, and is adapted to communicate through the internal interface with a power converter according to the internal protocol followed by the power converter.

9. The data transmission device of claim 8, further comprising a protocol transformation module, being adapted to convert instructions or messages of the internal protocol into corresponding instructions or messages of the external protocol and vice versa.

10. A multi-standard compatible electrical vehicle charger, comprising:
a power converter, including a system controller and a power module;
wherein the system controller, which includes an interface compatible with messages or instructions of a plurality of communication protocols, is adapted to receive messages or instructions of the plurality of communication protocols, and to configure according to the messages or instructions an output power of the power module which is adapted to provide output power; and
wherein when the electrical vehicle charger charges the electric vehicle, the system controller is coupled to the battery management system of the electric vehicle, and is adapted to communicate with the battery management system according to the communication protocol followed by the battery management system.

11. The multi-standard compatible electrical vehicle charger of claim 10, further comprising: an indication module, being adapted to send an indication message or a selection signal to the system controller to indicate the type of the communication protocol followed by the battery management system.

12. The multi-standard compatible electrical vehicle charger of claim 11, wherein the indication module receives input and generates the indication message or selection signal; or
after an electrical connection between a coupler of the EV charger and an electrical vehicle, the indication module identifies the type of the communication protocol followed by the battery management system of the electrical vehicle according to the identifier of the coupler, and generates the indication message or selection signal.

13. A multi-standard compatible electrical vehicle charger, comprising:
a power converter, including:
a power module, being adapted to provide output power; and
a system controller, being adapted to control the power module to output power; and
an instruction analysis module having an interface compatible with messages or instructions of a plurality of communication protocols, and being adapted to receive messages or instructions of the plurality of communication protocols;
wherein when the electrical vehicle charger charges the electric vehicle, the instruction analysis module is coupled respectively to the system controller and the battery management system of the electric vehicle, and is adapted to :
receive messages or instructions of a first communication protocol from the battery management system, convert them into corresponding messages or instructions of the second communication protocol followed by the system controller, and send the converted messages or instructions to the system controller; and
receive messages or instructions of the second communication protocol from the system controller, convert them into corresponding messages or instructions of the first communication protocol followed by the battery management system, and send the converted messages or instructions to the battery management system.

14. The multi-standard compatible electrical vehicle charger of claim 13, further comprising an indication module, being adapted to send an indication message or a selection signal to the instruction analysis module to indicate the protocol type of the first communication protocol.
